# EUROPEAN PATENT SPECIFICATION

(11) **EP 0 528 249 B1**
(45) Date of publication and mention of the grant of the patent: **10.12.1997**
(21) Application number: 92113227.0
(22) Date of filing: 03.08.1992
(51) Int. Cl.: B29C 70/08, B29B 15/10, A43B 23/17

(54) **Manufacturing method of rigid box toe for safety shoe**
Verfahren zur Herstellung einer Schuhspitze für Sicherheitsschuhe
Procédé de fabrication d'embout rigide pour chaussures de sécurité

(30) Priority: 08.08.1991 JP 199446/91
(43) Date of publication of application: 24.02.1993
(73) Proprietor: YKK CORPORATION, Chiyoda-ku, Tokyo (JP)
(72) Inventor: Mori, Tomohiro, Kurobe-shi, Toyama-ken (JP); Saiki, Ryuji, Kurobe-shi, Toyama-ken (JP); Ikehara, Hideji, Shimoniikawa-gun, Toyama-ken (JP); Tanaka, Yoshiharu, Shimoniikawa-gun, Toyama-ken (JP)
(74) Representative: Casalonga, Axel

(56) References cited:
- EP-A- 0 100 181
- EP-A- 0 185 960
- EP-A- 0 224 064
- EP-A- 0 243 147
- EP-A- 0 310 200

## Description

This invention relates to a method for manufacturing a rigid box toe element which is adapted to various shoes such as boot, shoe, and like to reinforce the shoe toe structurally so as to improve the safety of the shoe.

In conventional safety shoes, a safety box toe element is made of a metal such as a steel to protect the toes of the wearer against injury caused by a heavy object falling on the toe of the wearer, which is disclosed for example in United States Patents No. 3593438 ( 1971 ) and No. 3986279 ( 1976 ).

With this box toe element made of steel, because of its large weight, poor workability is provided to the wearer in foundries, factories, mines, athletic activities etc. In the recent years, attempts were made to use synthetic resin for making box toe elements in order to lighten the safety shoes. Since the box toe element made of only the synthetic resin provides poor stiffness, the box toe element for the safety shoe is made of the synthetic resin compounded with long glass fibers, which is devised as disclosed for example in Japanese Utility Model Publication No. 42402/1986. When long glass fibers are compounded in the synthetic resin, the stiffness of the box toe element is increased as known in the conventional art. However, this stiffness depends upon not only the amount of long fibers, but also depends upon various factors.

With the conventional moulding method of the box toe element, the sheet material of thermoplastic resin containing glass fibers is softened in a far infrared heating furnace and thereafter, compression-moulded in the metal mould. Since the two-dimensional form such as the sheet is compression-moulded in the metal mould to make three-dimensional form of the box toe element, the orientation of the glass fibers in the box toe element results in unbalanced stiffness therein. The cloth material and the unidirectional fiber material provide high stiffness, but provide poor flowability in the metal mould resulting in the moulding of the box toe element being difficult.

EP-A-0 100 181 discloses a method for making a box toe element which, in the preferred embodiment thereof, comprises introducing continuous, aligned fibres in the form of preformed reinforced polymer strips which consist of continuous, aligned fibres embedded in a polymer matrix. Reinforced strips are located in a mould and compression moulded to form the box toe element.

EP-A-0 310 200 discloses combination of synthetic resin having substantially different melting or decomposition points. These combinations of filaments may be in the form of woven fabrics. The low melting fibers may be melted to become uniformely distributed between the filaments of high melting points to form a reinforced composite material. Heating may be effected with or without simultaneous moulding.

It is therefore an object of this invention to provide a novel box toe element for a safety shoe including uniformly oriented inorganic fibers for reinforcement, which corresponds to Japanese Industrial Standard T8101 (leather safety shoe L-type).

According to this invention, there is provided a method for manufacturing a box toe element for a safety shoe which comprises the Steps of, covering a core mould with a raw material; and heating and pressing the raw material to be compression-moulded between the core mould and a press mould to form said box toe element by compression molding; characterized in that said raw material consists of three-dimensionally woven fabric of inorganic fibers and synthetic resin fibers having a shape identical to the finished box toe element, said synthetic resin fibers being melted and hardened during compression moulding to provide adhesive function in the resulting box toe element.

To weave the raw material three-dimensionally, it is favourable to make a three-dimensional cloth or a three axes textile by use of a known three-dimensional wovable loom. The heating and pressing may be carried out in a far infrared heating furnace or in a hot press moulding machine. When a large number of warps arranged in the longitudinal direction of the core mould are made of resin fibers in moulding, the resin fibers are molten with heating and the molten material drops down resulting in unequal composition and flashes. The warps and woofs are respectively longitudinally and laterally arranged against the perpendicular direction of the core mould. When the amount of resin fibers in the woofs is larger than that in the warps, laterally arranged synthetic resin fibres mutually interfer and the molten material do not drop down resulting in homogeneous composition and preventing the production of flashes.

The box toe element is preferably made of 55-65 % by weight of inorganic fibers based on the total weight of fibres. When the amount of the inorganic fibers exceeds 65 % by weight, the amount of the synthetic resin fibers is relatively reduced resulting in poor adhesion and thus insufficient stiffness. When the amount of the inorganic fibers is less than 55 % by weight, the amount of the synthetic resin fibers is undesiredly relatively increased so that the synthetic resin is apt to drop down during heating and moulding resulting in unbalanced stiffness and production of flashes in the lower parts of the products which then require secondary processing.

The box toe element of this invention may be made of inorganic fibers such as glass fibers, carbon fibers etc., and synthetic resin fibers, in particular thermoplastic resin fibers such as polyamide, polyester etc.

According to this invention, since the raw material is three-dimensionally pre-woven as a textile, a reinforced fiber is not omni-present under pressing as compared with the material of plain weave, resulting in a product of equal stiffness in each part of the box toe element. According to the result of Japanese Industrial Standard Test relative to the pressure stiffness, the sufficient stiffness of more than L-class may be obtained in the box toe element for the safety shoe. Since the inorganic fibers, such as glass fibers, carbon fibers etc. may be used as the reinforcing material, the box toe element may be made with a light weight as compared with the steel reinforced material resulting in a light and workable safety shoe. Since the adhesive is pre-woven as the synthetic resin fibers, the synthetic resin fibers may be equally and easily distributed in each part of the box toe element. Since the synthetic resin fibers are heated and molten to be hardened so as to produce the adhesive function, when the amount of the laterally arranged synthetic resin fibers becomes larger than that of the longitudinally arranged synthetic resin fibers during moulding the upper part of the synthetic resin is prevented from dropping down. The laterally arranged synthetic resin fibers mutually interfer, thus reducing the dropping-down of the molten synthetic resin fibers and providing a homogeneous product for a safety shoe toe element.

Other objects of this invention will become obvious upon an understanding of the illustrative embodiment about to be described or will be indicated in the appended claims, and various advantages not referred to herein will occur to one skilled in the art upon employment of the invention in practice.
FIG. 1 is an illustrative view of a compression-moulding process according to the present invention ;
FIG. 2 is an illustrative view of a method for three-dimentionally weaving a raw material ; and
FIG. 3 is an illustrative view of one example wherein box toe elements for safety shoes may be continuously manufactured according to this invention.

An embodiment of this invention will be described with reference to the figures.

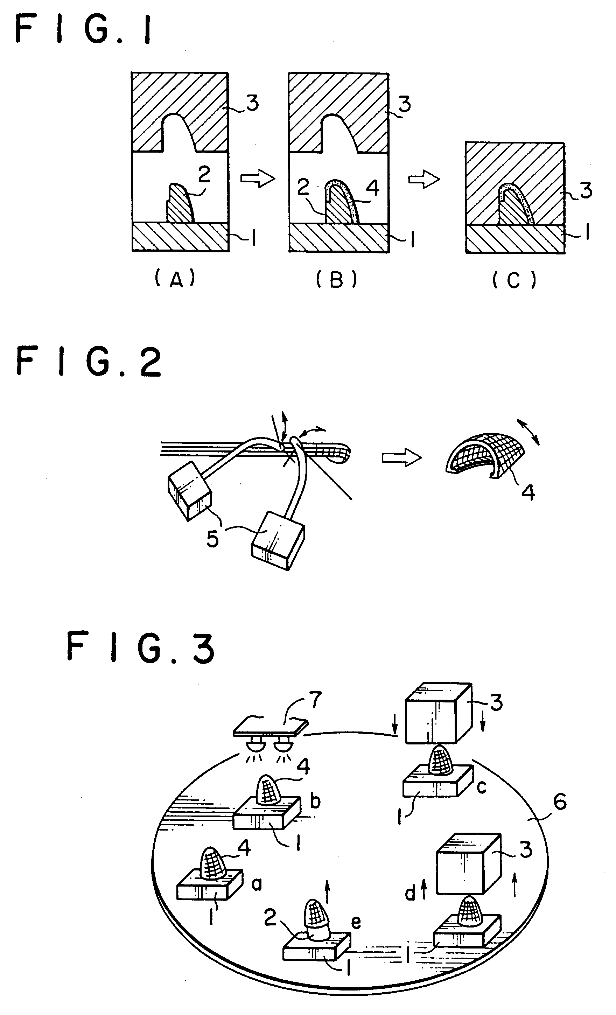

Figure 1 is an illustrative view of a compression-moulding process according to this invention. A core mould 2 is projected in the central position of a mould base 1 and a press mould 3 is disposed in the upper position of the mould base 1 in Figure 1. Figure 1(A) shows the opened state of the core mould 2 and the press mould 3. Core mould 2 is covered with a woven raw material 4 as shown in Figure 1(B). The press mould 3 is lowered to be firmly contacted with the mould base 1 as shown in Figure 1(C). The woven raw material 4 is pressed and moulded under heating between the core mould 2 and the press mould 3.

The woven raw material 4 is made of, for example synthetic resin fibers such as nylon-6 and glass fiber by the weight rate of 40 to 60 which are three-dimentionally woven by use of looms 5 as shown in Figure 2. Then, the woofs are laterally arranged against the perpendicular direction of the core mould 2 or arranged in the arrow direction of the woven raw material 4 shown in Figure 2. The amount of the synthetic resin fibers of the woofs is larger than the amount of the synthetic resin fibers contained in the warps of the woven raw material.

Figure 3 is a concept view of a continuous manufacturing apparatus. Plural mould bases 1 each provided with a core mould 2 on the central area thereof are arranged on a turntable 6 at proper intervals. In the a-position, the woven raw material 4 is supplied from the outside to cover the core mould 2. Nextly, in the b-position, the woven raw material 4 is heated by means of a far infrared heating device 7 to melt the synthetic resin fibers. And in the c-position, the press mould 3 is lowered to compress-mould the woven raw material 4 between the core mould 2 and the press mould 3. After the moulding, in the d-position, the press mould 3 is raised to open the core and press moulds 2, 3 and in the e-position, a product is taken out from the core mould 2.

The same processes are repeated to make continuously any number of toe elements for safety shoes.

Moreover, in the stated embodiment, the far infrared heating device is used to heat and melt the synthetic resin fibers. However, in the c-position, when the hot press is used, the far infrared heating device can be omitted.

## Claims

1. A method for manufacturing a box toe element for a safety shoe, comprising the steps of:
- covering a core mould (2) with a raw material (4); and
- heating and pressing said raw material (4) between said core mould (2) and a press mould (3) to form said box toe element by compression molding;
characterized in that said raw material consists of three-dimensionally woven fabric of inorganic fibers and synthetic resin fibers having a shape identical to the finished box toe element, said synthetic resin fibers being melted and hardened during compression moulding to provide adhesive function in the resulting box toe element.

2. The method of claim 1, characterized in that said raw material (4) comprises woofs laterally arranged with regard to the perpendicular direction of said core mould (2) and warps longitudinally arranged with regard to said perpendicular direction of said core mould (2), the amount of synthetic resin fibers in the woofs being larger than in the warps.

3. The method of claim 1 or 2, characterized in that the amount of inorganic fibers comprises 55 to 65% by weight of the total weight of fibers in said box toe element (4).

4. The method of anyone of claims 1 to 3, characterized in that said inorganic fibers are glass fibers or carbon fibers and said synthetic resin fibers are thermoplastic resin fibers.

## Patentansprüche

1. Verfahren zum Herstellen einer Zehenkappe für einen Sicherheitsschuh, umfassend die Schritte:
Bedecken einer Kernform (2) mit einem Rohmaterial (4); und
Erhitzen und Fressen des Rohmaterials (4) zwischen der Kernform (2) und einer Preßform (3), um die Zehenkappe durch Preßformen zu formen;
dadurch **gekennzeichnet**, daß das Rohmaterial aus einem dreidimensional gewebten Gespinst aus anorganischen Fasern und Kunststoffasern besteht, das eine mit der fertigen Zehenkappe identische Form hat, wobei die Kunststoffasern während dem Preßformen geschmolzen und gehärtet werden, um in der erhaltenen Zehenkappe eine Klebefunktion zu bewirken.

2. Verfahren nach Anspruch 1, dadurch **gekennzeichnet**, daß das Rohmaterial (4) Schußfäden umfaßt, die in Bezug auf die rechtwinklige Richtung der Kernform (2) quer angeordnet sind, und Kettfäden umfaßt, die in Bezug auf die rechtwinklige Richtung der Kernform (2) längsgerichtet angeordnet sind, wobei der Anteil der Kunststoffasern in den Schußfäden größer ist als in den Kettfäden.

3. Verfahren nach Anspruch 1 oder 2, dadurch **gekennzeichnet**, daß der Anteil der anorganischen Fasern 55 bis 65 Gewichtsprozent am Gesamtgewicht der Fasern in der Zehenkappe (4) beträgt.

4. Verfahren nach einem der Ansprüche 1 bis 3, dadurch **gekennzeichnet**, daß die anorganischen Fasern Glasfasern oder Karbonfasern sind und daß die Kunststoffasern thermoplastische Fasern sind.

## Revendications

1. Procédé de fabrication d'un embout de protection des orteils pour chaussure de sécurité, comprenant les étapes consistant à :
- recouvrir un moule à noyau (2) d'une matière première (4), et
- chauffer et comprimer ladite matière première (4) entre ledit moule à noyau (2) et un moule de compression (3) pour former ledit embout de protection des orteils par moulage par compression,
caractérisé en ce que ladite matière première comprend une étoffe de fibres minérales et de fibres de résine de synthèse, tissée de manière tri-dimensionnelle, ayant une forme identique à l'embout de protection des orteils terminé, lesdites fibres de résine de synthèse étant fondues et durcies pendant le moulage par compression pour assurer la fonction d'adhérence dans l'embout de protection des orteils ainsi formé.

2. Procédé selon la revendication 1, caractérisé en ce que ladite matière première (4) comprend des fils de trame disposés latéralement par rapport à la direction perpendiculaire dudit moule à noyau (2) et des fils de chaîne disposés longitudinalement par rapport à la direction perpendiculaire dudit moule à noyau (2), la quantité de fibres de résine de synthèse étant plus élevée dans les fils de trame que dans les fils de chaîne.

3. Procédé selon la revendication 1 ou 2, caractérisé en ce que la quantité de fibres minérales constitue de 55 à 65 % en poids du poids total de fibres dans ledit embout (4) de protection des orteils.

4. Procédé selon l'une quelconque des revendications 1 à 3, caractérisé en ce que lesdites fibres minérales sont des fibres de verre ou des fibres de carbone et lesdites fibres de résine de synthèse sont des fibres de résine thermoplastique.
